# EUROPÄISCHE PATENTANMELDUNG

(11) **EP 3 495 436 A1**
(43) Veröffentlichungstag der Anmeldung: **12.06.2019**
(21) Anmeldenummer: 17205657.4
(22) Anmeldetag: 06.12.2017
(51) Int. Cl.: C09D 183/02, C09D 183/04

(54) **WASSERDAMPFSTERILISIERBARE TRANSPARENTE BARRIERESCHICHTEN GEGEN SAUERSTOFFTRANSMISSION FÜR VERPACKUNGSMATERIALIEN**

(71) Anmelder: Evonik Degussa GmbH, 45128 Essen (DE)
(72) Erfinder: Die Erfindernennung liegt noch nicht vor

(57) **Zusammenfassung**

Die vorliegende Erfindung betrifft eine Formulierung, aufweisend: i) mindestens ein Hydrolysat mindestens einer Verbindung der Formel (I)

RSi(OX)₃ (I)

mit X gleich oder verschieden H, C₁ - C₄-Alkyl oder Acyl, R = OX, OH, C₁ - C₄-Alkyl oder Alkoxysilyl-substituierter Ethylenrest,
ii) mindestens ein Hydrolysat mindestens eines Alkoxysilylalkyl-Einheiten tragenden Polyisocyanurats,
iii) mindestens ein Hydroxylgruppen tragendes Polymer, und
iv) ein wasserhaltiges Lösungsmittelgemisch enthaltend mindestens einen Alkohol mit 1 bis 4 Kohlenstoffatomen, wobei der pH-Wert der Formulierung in einem Bereich von 1,8 - 4,7, bevorzugt von 3 - 4,5, liegt, ein Verfahren zu ihrer Herstellung, deren Verwendung zur Herstellung von Laminatstrukturen sowie entsprechende Laminatstrukturen mit mindestens 2 Schichten, aufweisend die Formulierung.

## Beschreibung

Gegenstand der vorliegenden Erfindung ist eine Formulierung, aufweisend:
i) mindestens ein Hydrolysat mindestens einer Verbindung der Formel (I)

   RSi(OX)₃ (I)

   mit X gleich oder verschieden H, C₁ - C₄-Alkyl oder Acyl, R = OX, OH, C₁ - C₄-Alkyl oder Alkoxysilyl-substituierter Ethylenrest,
ii) mindestens ein Hydrolysat mindestens eines Alkoxysilylalkyl-Einheiten tragenden Polyisocyanurats,
iii) mindestens ein Hydroxylgruppen tragendes Polymer, und
iv) ein wasserhaltiges Lösungsmittelgemisch enthaltend mindestens einen Alkohol mit 1 bis 4 Kohlenstoffatomen, wobei der pH-Wert der Formulierung in einem Bereich von 1,8 - 4,7, bevorzugt von 3 - 4,5, liegt, ein Verfahren zu ihrer Herstellung, deren Verwendung zur Herstellung von Laminatstrukturen sowie entsprechende Laminatstrukturen mit mindestens 2 Schichten, aufweisend die Formulierung.

Der Sauerstoff in der Luft ist eine der Ursachen und Voraussetzung für den Verderb von beispielsweise Lebensmitteln, Elektronik- oder Pharmaprodukten während des Transportes und der Lagerung. Der Verderb resultiert häufig aus dem Wachstum pathogener Bakterien oder Pilzen auf Lebensmitteln sowie aus der Oxidation der essentiellen Inhaltsstoffe. Daher wird angestrebt, Sauerstoff aus einer Vielzahl von Lebensmittel-, Elektronik- und Pharmaprodukten durch eine dichte Verpackung fernzuhalten.

Als Verpackungsmaterialien werden Polymere bzw. Kunststoffe wie z. B. Polyester, speziell Polyethylenterephthalat (PET), wegen ihrer Durchsichtigkeit bzw. optischen Transparenz, ihres geringen Gewichts und ihrer mechanischen Stabilität Alternativen aus Metall oder Glas vorgezogen. Die handelsüblichen leichten transparenten Kunststofffolien aus PET bieten lediglich einen eingeschränkten Schutz gegen das Eindiffundieren bzw. die Transmission des Sauerstoffs durch diese Folie in die Lebensmittel- oder Arzneimittelverpackung. Die typische Durchlässigkeit bzw. Transmission der 12 bis 125 Mikrometer dicken Kunststofffolien für Sauerstoff liegt im Bereich von 5 bis 500 cm³/m²/g/d/atm. Eine solche Durchlässigkeit - auch als Transmissionsrate bezeichnet - schränkt die Haltbarkeit und damit verbunden deren Verwendbarkeit dieser verpackten Produkte, z.B. Lebensmittel oder Arzneimittel, stark ein.

Um die Haltbarkeit bzw. Verwendbarkeit der verpackten Produkte zu verlängern, ist im Stand der Technik bekannt, dass Kunststoffe als Folien beschichtet werden und somit eine Laminatstruktur bzw. ein Laminat ausbilden. Zu einer Beschichtung dieser Kunststofffolien sowie zum Aufbau einer Laminatstruktur sind Polymere, beispielsweise Polyvinydichlorid (PVDC), Ethylenvinylalkohol (EVOH) oder Polyvinylalkohol (PVOH) wie auch anorganische Oxidverbindungen, z.B. Siliziumoxid- oder Aluminiumoxidverbindungen, im Stand der Technik bekannt. Diese Materialien werden aufgrund ihrer Eigenschaft, die Transmission bzw. das Eindiffundieren von Sauerstoff zu verringern, auch als Barrierematerialien bezeichnet. Die Beschichtung von Kunststofffolien mit einer oder mehrerer Barrierematerialien bildet Barriereschichten, welche zu einer Laminatstruktur führen, die die Durchlässigkeit bzw. Transmission für Sauerstoff im Vergleich zu einer unbeschichteten Kunststofffolie herabsetzen.

Nachteilig ist bei der Verwendung von Polyvinydichlorid (PVDC) die Entsorgung der Laminatfolie nach ihrem Gebrauch. Ethylenvinylalkohol (EVOH) oder Polyvinylalkohol (PVOH) verlieren zumindest teilweise ihre Barrierewirkung gegenüber Sauerstoff in Gegenwart hoher Feuchtigkeit, typischerweise bei >70% relativer Luftfeuchtigkeit. Insbesondere wird der Anstieg der Sauerstoffdurchlässigkeit und damit der Verlust der Barrierewirkung von PVOH- & EVOH-haltigen Verpackungsmaterialien nach der Behandlung mit heißem Wasserdampf bemerkbar bei 99 °C und 98 % relative Luftfeuchtigkeit über 16 h. Eine solche Behandlung ist Standard in der Lebensmittelindustrie zwecks Sterilisierung (Tötung pathogener Keime) und wird vor sowie insbesondere nach der Verpackung des Produkts durchgeführt. Diese Sterilisierung mit heißem Wasserdampf ist als "Retorting" bzw. "Retort Treatment" im Stand der Technik bekannt.

So offenbart US 7531243 B2 die Herstellung transparenter Barriereschichten, welche Schichtsilikate aufweisen, gegen Sauerstofftransmission, die ihre Barrierewirkung auch unter hoher Luftfeuchtigkeit beibehalten. Die Herstellung erfolgt auf Basis der Sol-Gel Methode unter Verwendung von Polymeren, die Hydroxy-Gruppen aufweisen und durch Kondensationsreaktionen abreagieren. Als Polymer wird PVOH verwendet. Als Sol-Gel Methode wird die Hydrolyse der Alkoxysilanen mit Salzsäure bei niedrigen pH-Werten, d. h. pH <2, angewandt.

US 7157147 B2 offenbart die Herstellung transparenter Barriereschichten gegen Sauerstofftransmission, die auch nach 30 min Behandlung mit heißem Wasser bei 90°C eine Sauerstofftransmissionsrate von 1 g/m²/d/atm beibehalten. Die Herstellung erfolgt aus Schichtsilikaten, hydrolysierten Alkoxysilanen, Polyvinylalkohol (PVOH) und Polyethylenoxid. Die Dicke der beschriebenen Barriereschichten beträgt 2 µm. Die Barrierewirkung wird erst nach Alterung bzw. Reifung der Laminatstruktur in feuchter Atmosphäre bei 40°C über 4 d erreicht. Die in US 7157147 B2 verwendete Wassertemperatur von 90°C reicht in der Regel für eine Sterilisierung nicht aus. Nachteilig an diesem Verfahren und dem verfahrensgemäß hergestellten Laminat ist der geforderte Zusatz von Schichtsilikaten, da das Verfahren komplexer und der Erhalt einer konstanten Filmqualität in der Massenproduktion erschwert wird.

US 7763335 B2 offenbart ein Mehrschrittprozess zur Herstellung Laminatstrukturen, die ihre Barrierewirkung gegen Sauerstofftransmission auch nach 30 min Behandlung mit Wasser bei 120°C im Autoklav beibehalten. Der Prozess umfasst eine Formulierung basierend auf Polyacrylsäure und Alkoxysilanen, Temperaturkontrolle bei 10°C, Beschichtung, Trocknung 5 min bei 80°C, Alterung bzw. Reifung des Laminats bei 50°C innerhalb von 3 d, Nachbehandlung 5 min bei 200°C, Einweichen für 20 s in wässrige Lösung von Calcium Acetat bei 80°C und anschließende Trocknung. Die Nachteile der beschriebenen Methode liegen in der Komplexität, der langen Gesamtdauer von mehreren Tagen, der schwer in einem Rolle-zu-Rolle Verfahren realisierbaren Einzelschritte sowie in hohen Temperaturen von bis zu 200°C, denen handelsübliche und temperaturempfindliche Trägerfolien für Lebensmittelverpackung nicht länger als einige Sekunden oder kürzer ausgesetzt werden können.

US 2017/0009034 A1 offenbart Formulierungen aus Alkoxysilanen und Polyvinylalkohol, die einen pH-Wert im Bereich von 1 bis 3 unter Kühlung dieser Formulierungen auf 10°C aufweisen. Aus dieser Formulierung werden über eine 2-stufige Trocknung dieser Schichten binnen 30 s bei 100°C gefolgt von 72 h bei 85°C Laminate erzeugt. Die so hergestellten Laminate behalten ihre Barrierewirkung gegen die Transmission von Sauerstoff auch nach 500 h Lagerung bei 60°C und 90% relativer Luftfeuchtigkeit bei. Nachteilig ist jedoch, um sterilisierbare Laminatstrukturen herzustellen, dass diese Barriereschichten mit aus der Gasphase abgeschiedenem Aluminiumoxid kombiniert werden müssen. Dies erfordert den Einsatz einer komplexeren Ausstattung in der Herstellung. Weiterhin ist nachteilig, dass die Nachbehandlung des Laminates in Form einer 2-stufigen Trocknung mit einem Zeitbedarf über 3 d erforderlich ist.

US 7560168 B2 offenbart die Herstellung transparenter Barriereschichten gegen Sauerstofftransmission, die ihre Barrierewirkung auch nach 30 min Sterilisierung mit heißem Wasserdampf bei 121 °C ("Retort Treatment") beibehalten. Die Herstellung erfolgt auf Basis von Hydrolysaten der Alkoxysilane und Polymeren mit Hydroxy-Gruppe, die als Barriereschicht auf eine zuvor durch ein Gasphasenprozess abgeschiedene anorganische Aluminiumoxid-Schicht appliziert werden. Als Polymer mit Hydroxy-Gruppe wird Polyvinylalkohol verwendet. Nachteilig an diesem Stand der Technik ist die Notwendigkeit eine anorganische Schicht aus Aluminiumoxid oder Siliziumoxid mit Hilfe eines Gasphasenverfahrens aus dem Vakuum zuerst auf die Kunststofffolie abzuscheiden, bevor die Barriereschicht aufgetragen wird.

Nachteilig bei der Verwendung von anorganischen Oxidverbindungen, beispielsweise Siliziumoxid- oder Aluminiumoxidverbindungen, ist das Beschichten der Kunststofffolie mittels technisch aufwendiger Vakuum- bzw. Gasphasenabscheidungsprozessen, wie z. B. CVD (Chemical Vapor Deposition), PVD (Physical Vapor Deposition) sowie Elektronenstrahlverdampfung, oder ebenfalls in einem zusätzlichen Verfahrensschritt bei der Beschichtung aus kondensierter Phase mittels technisch aufwendiger Dispergierungsverfahren.

Es besteht daher ein Bedarf an Formulierungen und ein Verfahren zu ihrer Herstellung, welche es ermöglichen mit Kunststofffolien Laminatstrukturen auszubilden, die die Transmission bzw. die Durchlässigkeit bzw. die Diffusion von Sauerstoff durch diese Laminatstrukturen auch nach erfolgter Wasserdampf-Sterilisierung (Retort Treatment) auf ein Minimum reduzieren. Unter einem Minimum wird im Rahmen der vorliegenden Erfindung eine Sauerstofftransmisson bzw. Oxygen-Transmission Rate (OTR) ≤ 4 cm³/m²/d/atm verstanden. Unter einer Wasserdampf-Sterilisierung (Retort Treatment) werden Bedingungen einer relativen Luftfeuchte > 97 % bei Temperaturen > 98°C über eine Dauer von mindestens 10 min aufgefasst. Die Formulierung, ihre Herstellung sowie ihre Verwendung zur Herstellung von Laminaten, welche einen OTR-Wert ≤ 4 cm³/m²/d/atm aufweist, ist frei von anorganischen Metalloxiden, unabhängig davon, ob besagte anorganische Metalloxide mittels kondensierter Phase, beispielsweise durch Dispergierung oder mittels Gasphasenabscheidung hätten aufgebracht werden können.

Gelöst wird die Aufgabe durch eine Formulierung, aufweisend:
i) mindestens ein Hydrolysat mindestens einer Verbindung der Formel (I)

   RSi(OX)₃ (I)

   mit X gleich oder verschieden H, C₁ - C₄-Alkyl oder Acyl, R = OX, OH, C₁ - C₄-Alkyl oder Alkoxysilyl-substituierter Ethylenrest,
ii) mindestens Hydrolysat mindestens eines Alkoxysilylalkyl-Einheiten tragenden Polyisocyanurats,
iii) mindestens ein Hydroxylgruppen tragendes Polymer und
iv) wasserhaltiges Lösungsmittelgemisch enthaltend mindestens einen Alkohol mit 1 bis 4 Kohlenstoffatomen,
welche dadurch gekennzeichnet ist, dass der pH-Wert von 1,8 - 4,7, bevorzugt von 3 - 4,5, beträgt.

Unter Hydrolysaten wird im Rahmen der vorliegenden Erfindung die aus der Hydrolyse von z. B. Silizium-Alkoxid-Bindungen entstehenden Intermediate sowie deren durch Kondensationsreaktionen gebildeten Folgeprodukte verstanden, wie bereits im Stand der Technik, beispielsweise in US 7531243 B2, US 7157147 B2, US 7763335 B2, US 2017/0009034 A1 oder US 7560168 B2, offenbart wird. Substanzen der Formel (I) RSi(OX)₃ bilden beim Lösen in Alkohol-Wasser Gemischen Hydrolysate der Formel RSi(OH)₃ und/oder polymere Kondensationsprodukte mit den Struktureinheiten [RSi(OX)₂O_{1/2}]ₙ, n ≥ 1, [RSi(OX)O]ₘ, m ≥ 1, [RSiO_{3/2}]ₖ, k > 1, R = OH, H, O_{1/2}, Alkyl, C₁₂N₃H₂₇[Si(OX)₃] oder C₂H₄Si(OX)₃.

Diese Struktureinheiten sind u. a. mittels der ²⁹Si-NMR-Spektroskopie nachweisbar, wie bereits US 2017/0009034 A1 offenbart. Diese Hydrolysate sind instabil und daher vorallem als Zwischenprodukte bzw. als Intermediate anzusehen. Sie gehen miteinander Kondensationsreaktionen ein und bilden somit Produkte der Formel [RSiO_{3/2}]ₖ, mit k > 1, R = O_{1/2}, OH, H, Alkyl, C₁₂N₃H₂₇[Si(OX)₃], C₂H₄Si(OX)₃ und werden im Folgenden als Hydrolysate-Kondensate bezeichnet. Die o.g. Kondensationsreaktionen finden im Wesentlichen in der barrierebildenden Schicht auf der Kunststofffolie und/oder der Barriereschicht während der Trocknung und Nachbehandlung der Laminatstruktur, aber auch langsam in der Formulierung statt. Daher ist es praktikabler für die Berechnung der Zusammensetzungen der Formulierung sowie der Barriereschicht anstelle von Konzentrationen der Substanzen der Formel RSi(OX)₃, Konzentrationen der entsprechenden Hydrolysate-Kondensate zu verwenden. Beispielsweise wird anstelle der Konzentration des Tetraalkoxysilans, die Konzentration des Hydrolysate-Kondensates SiO₂ (Siliziumdioxid) berechnet.

Es kann vorteilhaft sein, wenn die erfindungsgemäße Formulierung vorzugsweise in ihrem wasserhaltigen Lösungsmittelgemisch mindestens eine Säure, vorzugsweise eine nichtflüchtige Säure aufweist. Unter nichtflüchtiger Säure wird im Rahmen der vorliegenden Erfindung eine Säure aufgefasst, welche in einem Bereich von SATP-Bedingungen ("Standard Ambient Temperature T and Pressure P", T = 25°C und P = 1013 hPa) bis zu 100°C bei gleichbleibenden Druck nicht oder nur in unwesentlichen Mengen über die Gasphase aus dem Lösungsmittelgemisch abtrennbar ist.

Bevorzugt ist die nichtflüchtige Säure ausgewählt aus der Gruppe aufweisend Phosphorsäure, Maleinsäure, Malonsäure, Acetylsalicylsäure, Polyacrylsäure, Schwefelsäure, deren Säureanhydride oder Mischungen davon.

Es kann vorteilhaft sein, wenn der Gehalt an nichtflüchtiger Säure in der Formulierung in einem Bereich von 0,03 Gew.-% bis 3 Gew.-%, bevorzugt von 0,1 Gew.-% bis 1 Gew.-%, besonders bevorzugt von 0,2 Gew.-% bis 0,7 Gew.-%, bezogen auf den Feststoffanteil der Formulierung, liegt.

Das Alkoxysilyl-Einheiten tragende Polyisocyanurat weist vorzugsweise die Formel (II)

(R'-NCO)n (II)

auf mit n ≥ 3, bevorzugt n = 3 und R' einen mindestens 3 C-Atome aufweisenden, bevorzugt 3 C-Atome aufweisenden Alkylenrest darstellt, an den eine Trialkoxysilylgruppe, bevorzugt eine Trimethoxysilylgruppe, gebunden ist. Besonders bevorzugt findet das unter der CAS-Registrier-Nr. 26115-70-8 offenbarte Tris[3-(trimethoxysilyl)propyl] isocyanurat Verwendung in der Formulierung.

Vorteilhafterweise beträgt der Gehalt des Hydrolysates des Alkoxysilylalkyl-Einheiten tragenden Polyisocyanurats der Formel (II) von 1 Gew.-% bis 10 Gew.-%, bezogen auf den Feststoffanteil der Formulierung.

Das Hydroxylgruppen tragende Polymer ist vorzugsweise ausgewählt aus der Gruppe beinhaltend Polyvinylalkohole, Ethylen-Vinylalkohol Copolymere, wobei der Verseifungsgrad vorzugsweise über 85 %, bevorzugt über 95 % und wobei der Anteil der Ethyleneinheiten im Ethylen-Vinylalkohol Copolymer vorzugsweise weniger als 28 Gew.-%, bezogen auf die Masse des Ethylen-Vinylalkohol Copolymeren, beträgt. Geeignete Polymere sind kommerziell erhältlich, beispielsweise unter den Handelsmarken Poval®, Mowiol®, Eval® und Exceval® von dem Unternehmen Kuraray, Soarnol® von dem Unternehmen Nippon Gohsei. Sie unterscheiden sich in ihrem Molekulargewicht, Verseifungsgrad und Ethylengehalt. Unter dem Verseifungsgrad wird im Rahmen der vorliegenden Erfindung der Anteil an freien Hydroxylgruppen im Hydroxylgruppen tragenden Polymer verstanden und ist den Herstellerangaben entnommen.

Der Gehalt des Hydroxylgruppen tragenden Polymers beträgt vorzugsweise von 13 Gew.-% bis 33 Gew.-%, bevorzugt von 15 Gew.-% bis 25 Gew.-%, besonders bevorzugt von 17 Gew.-% bis 22 Gew.-%, bezogen auf den Feststoffanteil der Formulierung.

Der Gehalt an SiO₂, stammend aus einer Verbindung der Formel (I) mit R = OX und X = C₁ - C₄-Alkyl beträgt vorzugsweise von 60 Gew.-% bis 90 Gew.-%, bevorzugt von 70 Gew.-% bis 85 Gew.-%, besonders bevorzugt von 75 Gew.-% bis 80 Gew.-%, bezogen auf den Feststoffanteil der Formulierung. Vorteilhafterweise wird eine Verbindung der Formel (I) mit X = C₁- oder C₂-Alkyl mit entsprechendem R = OX verwendet.

Es kann auch vorteilhaft sein, wenn der Gehalt des Hydrolysates aus einer Verbindung der Formel (I) mit X = C₁ - C₄-Alkyl und R = OH, C₁ - C₄-Alkyl oder Alkoxysilyl-substituierter Ethylenrest bis zu 20 Gew.-%, bevorzugt von 0,05 Gew.-% bis 15 Gew.-%, besonders bevorzugt von 1 Gew.-% bis 10 Gew.-% beträgt, bezogen auf den Feststoffanteil der Formulierung.

Ein weiterer Gegenstand der vorliegenden Erfindung ist ein Verfahren zur Herstellung der erfindungsgemäßen Formulierung, gekennzeichnet durch die Schritte:
a) Bereitstellen mindestens:
   a1) einer Alkoxysilyl-Einheiten beinhaltenden Verbindung der Formel (I) wie oben definiert,
   a2) eines Alkoxysilylalkyl-Einheiten tragenden Polyisocyanurats der Formel (II) wie oben definiert,
   a3) mindestens eines Hydroxylgruppen tragenden Polymeren wie oben definiert,
   a4) eines wasserhaltigen Lösungsmittelgemisches enthaltend mindestens einen Alkohol mit 1 bis 4 Kohlenstoffatomen,
   a5) mindestens einer nichtflüchtigen Säure, deren Säureanhydrid oder Mischungen davon;
b) In-Kontakt-bringen der unter a1) - a5) genannten Edukte unter Bildung der Formulierung, wobei die Kontaktzeit von 1 min bis 5 h beträgt, die Temperatur mindestens 16°C beträgt und der pH-Wert in einem Bereich von 1,8 - 4,7, bevorzugt von 3 - 4,5 liegt.

Mit ein weiterer Gegenstand der vorliegenden Erfindung ist eine Laminatstruktur mit mindestens 2 Schichten, aufweisend:
i) die erfindungsgemäße Formulierung in mindestens einer ihrer offenbarten Ausführungsformen und
ii) ein Substrat mit einer Glasübergangstemperatur Tg > 60°C, bevorzugt Tg > 90°C., welches frei von anorganischen Oxidschichten aus Gasphasenabscheidungsprozessen ist.

Unter einem Substrat wird im Rahmen der vorliegenden Erfindung eine Kunststofffolie verstanden, insbesondere transparente Kunststofffolien mit einer Glasübergangstemperatur Tg > 60°C, bevorzugt Tg > 90°C. Besonders bevorzugt sind Kunststofffolien auf Basis von Polyestern, beispielsweise Polyethylenterephthalat (PET).

Vorteilhafte Laminate bzw. Laminatstrukturen weisen transparente Substrate auf. Ebenfalls vorteilhaft ist es, wenn das Substrat von beiden Seiten, d. h. der Vorder- und Rückseite oder der Ober- und Unterseite des Substrats, mit der erfindungsgemäßen Formulierung beschichtet ist.

Die erfindungsgemäße Laminatstruktur zeichnet aus, dass sie eine Sauerstofftransmissionsrate OTR nach erfolgter Wasserdampf-Sterilisierung, d. h. nach erfolgtem "Retort Treatment", bis maximal 4 cm³/m²/d/atm aufweist.

Ein weiterer Gegenstand der vorliegenden Erfindung ist ein Verfahren zur Herstellung einer Laminatstruktur, das die nachfolgenden Schritte:
a) Bereitstellen der erfindungsgemäßen Formulierung nach mindestens einer ihrer offenbarten Ausführungsformen;
b) Breitstellen eines Substrats;
c) optional Aktivierung des Substrats;
d) Beschichten des Substrats mit der unter a) genannten Formulierung, vorzugsweise auf beiden Seiten des Substrats;
e) erste Nachbehandlung unter Energieeintrag, vorzugsweise als thermische Behandlung;
f) zweite Nachbehandlung unter den Bedingungen einer Wasserdampf-Sterilisierung aufweist.

Das Substrat bzw. die Kunststofffolie kann optional zur Verbesserung der Haftung der aus der Formulierung resultierenden Barriereschicht vorbehandelt oder aktiviert werden. Als Aktivierungsmethoden eignen sich insbesondere Plasma, Corona, Dielektrische Barriereentladung (DBE) oder UV-Strahlung mit Ozon. Die Beschichtung des Substrats bzw. der Kunststofffolie mit der erfindungsmäßen Formulierung erfolgt mit konventionellen Beschichtungsmethoden. Als nicht-einschränkende Beispiele sind Beschichtungsmethoden mit Rakel, Schlitzdüsenbeschichtung, Beschichtung mit der Walze, Gravurbeschichtung, Sprühbeschichtungsverfahren und Tauchbeschichtungsverfahren zu nennen.

Der erste Schritt der Nachbehandlung erfolgt vorzugsweise thermisch, bevorzugt als Trocknung, vorzugsweise direkt nach der Beschichtung; bevorzugt wird eine Trocknung mit warmer Luft oder Heißgebläse durchgeführt. Die Trocknung kann auch Bestandteil des anschließenden zweiten Nachbehandlungsschrittes sein. Der thermische Nachbehandlungsschritt wird vorzugsweise bei Temperaturen von 100 bis 320°C, bevorzugt von 120°C bis 300°C durchgeführt.

Der erste Nachbehandlungsschritt kann auch durch Energieeintrag aus anderen Quellen wie Elektronenstrahl, Plasma oder Mikrowellenstrahlung oder einer Kombination davon erfolgen.

Vorteilhaft an dem erfindungsgemäßen Verfahren zur Herstellung einer Laminatstruktur ist, dass es keinen Verfahrensschritt aufweist, in dem eine Gasphasenabscheidung erfolgt.

Es ist selbstverständlich und beabsichtigt, dass alle Ausführungsformen die hierin im Zusammenhang mit den beschriebenen Formulierungen offenbart sind, in gleichem Maße auf die beschriebenen Verfahren und Erzeugnisse anwendbar sind und umgekehrt. Derartige Ausführungsformen fallen ebenfalls in den Umfang der vorliegenden Erfindung.

Die nachfolgenden Beispiele sollen den Gegenstand der vorliegenden Erfindung näher erläutern, ohne dabei einschränkend zu wirken.

### Ausführungsbeispiel 1E (erfindungsgemäß)

Barrierebildende Schichten werden aus einer Formulierung hergestellt. Die Formulierung besteht aus der Mischung der Stammlösungen (A), (B), (C) und (D) wie folgt:
Stammlösung (A): 5 Gew.-% Lösung SiO₂ hergestellt aus 500 mg Essigsäure (100%), 17,9 g Tetraethoxysilan, 10 g Isopropylalkohol, 71,6 g Wasser. Dafür werden 10 g Isopropylalkohol, 11,6 g Wasser, 500 mg Essigsäure vorgelegt, 17,9 g Tetraethoxysilan innerhalb von 4 h beim intensiven Rühren dazu getropft und die restlichen 60 g Wasser addiert. Anschließend wird die Lösung eine weitere Stunde gereift. Der pH-Wert der Lösung wird mit Indikatorpapier kontrolliert und liegt im Bereich von 3,5 bis 4,1.
Stammlösung (B): 5 Gew.-% Lösung PVOH hergestellt aus 5 g Kuraray® Poval®-60-98, 90 g Wasser und 5 g Isopropylalkohol.
Stammlösung (C): 5 Gew.-% Lösung des Hydrolysate-Kondensates von 1,3,5-tris(3-trimethoxysilylpropyl)isocyanurate (berechnet als Hydrolysat-Kondensat C₁₂N₃H₂₇Si₃O_{4.5}) hergestellt aus 7,5 g 1,3,5-Tris(3-trimethoxysilylpropyl)isocyanurat entsprechend der CAS-Registrier-Nr. 26115-70-8, 46,2 g Wasser, 46,2 g Isopropylalkohol und 500 mg Essigsäure.
Stammlösung (D): 4 Gew.-% Lösung Phosphorsäure in Wasser.

Die Formulierung für die Beschichtung wird aus den Stammlösungen in einem Gewichtsverhältnis, bezogen auf den Feststoffanteil, A : B : C : D = 78 : 20 : 2 : 0,5 gemischt.

Die Formulierung wird mittels eines automatischen Filmziehgerätes, ausgerüstet mit 12 µm Spiralrakel, auf beiden Seiten der vorher mit UV/Ozon aktivierten 50 µm PET Folie beschichtet und nach dem Beschichten jede Seite 1 min bei 100 °C getrocknet. Anschließend wird die PET Folie mit den barrierebildenden Schichten auf beiden Seiten 20 h bei 140 °C in eine Barrierefolie bzw. Laminatstruktur konvertiert. Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 h bei 99 °C und 98% relativer Luftfeuchtigkeit zwecks Sterilisierung ("Retort Treatment") behandelt. Die Sauerstofftransmissionsrate dieser sterilisierten Barrierefolie bei 23 °C und 90% relative Luftfeuchtigkeit beträgt weniger als 0,4 cm³/m²/d/atm.

### Ausführungsbeispiel 2E (erfindungsgemäß)

Wie Ausführungsbeispiel 1, jedoch wird die Formulierung für die Beschichtung mit der barrierebildenden Schicht aus den Stammlösungen in einem Gewichtsverhältnis, bezogen auf den Feststoffanteil, A : B : C : D = 74 : 20 : 6: 0,5 gemischt. Der pH-Wert liegt in einem Bereich von 3,5 bis 4,1.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 h bei 99 °C und 98% relativer Luftfeuchtigkeit zwecks Sterilisierung ("Retort Treatment") behandelt. Die Sauerstofftransmissionsrate dieser Laminatstruktur bei 23 °C und 90% relativer Luftfeuchtigkeit beträgt weniger als 0,8 cm³/m²/d/atm.

### Ausführungsbeispiel 3E (erfindungsgemäß)

Wie Ausführungsbeispiel 1, jedoch wird die Formulierung für die Beschichtung mit der barrierebildenden Schicht aus den Stammlösungen in einem Gewichtsverhältnis, bezogen auf den Feststoffanteil, A : B : C : D = 75 : 16 : 9 : 0,25 gemischt. Der pH-Wert liegt in einem Bereich von 3,5 bis 4,1.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 h bei 99 °C und 98% relativer Luftfeuchtigkeit zwecks Sterilisierung ("Retort Treatment") behandelt. Die Sauerstofftransmissionsrate OTR dieser Laminatstruktur bei 23 °C und 90% relative Luftfeuchtigkeit beträgt 1,3 cm³/m²/d/atm.

### Ausführungsbeispiel 4E (erfindungsgemäß)

Wie Ausführungsbeispiel 1, jedoch wird die Formulierung für die Beschichtung mit der barrierebildenden Schicht aus den Stammlösungen in einem Gewichtsverhältnis, bezogen auf den Feststoffanteil, A : B : C : D = 74 : 20 : 6 : 0 gemischt. Der pH-Wert liegt in einem Bereich von 3,5 bis 4,1.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 Std bei 99 °C und 98% relativer Luftfeuchtigkeit zwecks Sterilisierung ("Retort Treatment") behandelt. Die Sauerstofftransmissionsrate OTR dieser Laminatstruktur bei 23 °C und 90% relativer Luftfeuchtigkeit beträgt 4 cm³/m²/d/atm.

### Ausführungsbeispiel 5E (erfindungsgemäß)

Wie Beispiel 1, jedoch wurde in der Stammlösung (A) anstelle von 500 mg Essigsäure 500 mg von 0,4 Gew.-% Salzsäure benutzt und die Zubereitung der Lösung dauerte weniger als 30 min. Der pH-Wert der Lösung wurde mit Indikatorpapier kontrolliert und lag im Bereich von 2,9 bis 3,5. Die erfindungsgemäße Formulierung der Stammlösungen wurde in einem Gewichtsverhältnis, bezogen auf den Feststoffanteil, A : B : C : D = 78 : 20 : 2 : 0,5 unmittelbar nach ihrer Herstellung, d.h. nach einer Kontaktzeit von 1 min, zur Beschichtung einer PET-Folie gemäß Ausführungsbeispiel 1 verarbeitet.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 Std bei 99 °C und 98% relativer Luftfeuchtigkeit zwecks Sterilisierung ("Retort Treatment") behandelt. Die Sauerstofftransmissionsrate OTR dieser Laminatstruktur bei 23 °C und 90% relativer Luftfeuchtigkeit beträgt 0,9 cm³/m²/d/atm.

### Ausführungsbeispiel 6E (erfindungsgemäß)

Wie Ausführungsbeispiel 1, jedoch wird die Formulierung für die Beschichtung mit der barrierebildenden Schicht aus den Stammlösungen in einem Gewichts-verhältnis, bezogen auf den Feststoffanteil, A : B : C : D = 73 : 20 : 7 : 0,25 gemischt. Der pH-Wert liegt in einem Bereich von 3,5 bis 4,1.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 h bei 99 °C und 98% relativer Luftfeuchtigkeit zwecks Sterilisierung ("Retort Treatment") behandelt. Die Sauerstofftransmissionsrate OTR dieser Laminatstruktur bei 23 °C und 90% relative Luftfeuchtigkeit beträgt 2 cm³/m²/d/atm.

### Ausführungsbeispiel 7E (erfindungsgemäß)

Wie Ausführungsbeispiel 1, jedoch wird die Formulierung für die Beschichtung mit der barrierebildenden Schicht aus den Stammlösungen in einem Gewichtsverhältnis, bezogen auf den Feststoffanteil, A : B : C : D = 75 : 18 : 7 : 0,25 gemischt. Der pH-Wert liegt in einem Bereich von 3,5 bis 4,1.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 h bei 99 °C und 98% relativer Luftfeuchtigkeit zwecks Sterilisierung ("Retort Treatment") behandelt. Die Sauerstofftransmissionsrate OTR dieser Laminatstruktur bei 23 °C und 90% relative Luftfeuchtigkeit beträgt 2 cm³/m²/d/atm.

### Vergleichsbeispiel 1V

Analog zum Ausführungsbeispiel 1, jedoch werden in den Stammlösungen (A) und (C) anstelle von 500 mg Essigsäure (100%) jeweils 500 mg Salzsäure mit 10 Gew.-% HCl verwendet. Die Zubereitung dauerte weniger als 30 Minuten, der pH Wert der Stammlösungen ist <2. Die Formulierung für die Beschichtung wird aus den Stammlösungen in einem Gewichtsverhältnis, bezogen auf den Feststoffanteil, A : B : C : D = 78 : 20 : 2 : 0 gemischt. Der pH Wert der Formulierung, welche zur Beschichtung einer PET-Folie gemäß Ausführungsbeispiel 1 verwendet wird, liegt in einem Bereich von 1,5 - 2,1.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 h bei 99 °C und 98% relativer Luftfeuchtigkeit zwecks Sterilisierung("Retort Treatment") behandelt. Die Sauerstofftransmissionsrate OTR dieser Laminatstruktur bei 23 °C und 90% relativer Luftfeuchtigkeit beträgt 22 cm³/m²/d/atm.

### Vergleichsbeispiel 2V

Analog zum Ausführungsbeispiel 1, jedoch wird die Formulierung für die Beschichtung aus den Stammlösungen in einem Gewichtsverhältnis, bezogen auf den Feststoffanteil, A : B : C : D = 74 : 20 : 6 : 1 gemischt. Der pH-Wert liegt in einem Bereich von 3,5 bis 4,1.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 h bei 99 °C und 98% relativer Luftfeuchtigkeit zwecks Sterilisierung ("Retort Treatment") behandelt. Die Sauerstofftransmissionsrate OTR dieser Laminatstruktur bei 23 °C und 90% relativer Luftfeuchtigkeit beträgt 13 cm³/m²/d/atm.

### Vergleichsbeispiel 3V

Analog zum Ausführungsbeispiel 1, jedoch wird die Formulierung für die Beschichtung aus den Stammlösungen in einem Gewichtsverhältnis, bezogen auf den Feststoffanteil, A : B : C : D = 58 : 40 : 2 : 0,4 gemischt. Der pH-Wert liegt in einem Bereich von 3,5 bis 4,1.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 h bei 99 °C und 98% relativer Luftfeuchtigkeit zwecks Sterilisierung ("Retort Treatment") behandelt. Die Sauerstofftransmissionsrate OTR dieser Laminatstruktur bei 23 °C und 90% relativer Luftfeuchtigkeit beträgt 23 cm³/m²/d/atm.

### Vergleichsbeispiel 4V

Analog zum Ausführungsbeispiel 1, jedoch wird die Formulierung für die Beschichtung aus den Stammlösungen in einem Gewichtsverhältnis, bezogen auf den Feststoffanteil,
A : B : C : D = 88 : 10 : 2 : 0,4 gemischt. Der pH-Wert liegt in einem Bereich von 3,5 bis 4,1.

Die Sauerstofftransmissionsrate OTR dieser Laminatstruktur bei 23 °C und 90% relativer Luftfeuchtigkeit beträgt weniger als 0,1 cm³/m²/d/atm. Ein zweiter Teil dieser Laminatstruktur wird 16 h bei 99 °C und 98% relativer Luftfeuchtigkeit zwecks Sterilisierung ("Retort Treatment") behandelt. Die Sauerstofftransmissionsrate OTR dieser Laminatstruktur bei 23 °C und 90% relativer Luftfeuchtigkeit beträgt 20 cm³/m²/d/atm.

Die nachfolgende Tabelle fasst die Ergebnisse der erfindungsgemäßen sowie der Vergleichsbeispiele zusammen.

| Beispiel | Anteil in Formulierung an Stammlösung | | | | pH | OTR nach Retort Treatment [cm³/m²/d/atm] |
|---|---|---|---|---|---|---|
| | A | B | C | D | | |
| 1E | 78 | 20 | 2 | 0.5 | 3.8±0.3 | 0.4 |
| 2E | 74 | 20 | 6 | 0.5 | 3.8±0.3 | 0.8 |
| 3E | 75 | 16 | 9 | 0.25 | 3.8±0.3 | 1.3 |
| 4E | 74 | 20 | 6 | 0 | 3.8±0.3 | 4 |
| 5E | 78 | 20 | 2 | 0.5 | 3.2±0.3 | 0.9 |
| 6E | 73 | 20 | 7 | 0.25 | 3.8±0.3 | 2 |
| 7E | 75 | 18 | 7 | 0.25 | 3.8±0.3 | 2 |
| 1V | 78 | 20 | 2 | 0 | 1.8±0.3 | 22 |
| 2V | 74 | 20 | 6 | 1 | 3.8±0.3 | 13 |
| 3V | 58 | 40 | 2 | 0.4 | 3.8±0.3 | 23 |
| 4V | 88 | 10 | 2 | 0.4 | 3.8±0.3 | 20 |

Die eingangs gestellte Aufgabe der Bereitstellung einer Formulierung, mittels deren Verwendung Laminatstrukturen herstellbar sind, die eine Sauerstofftransmissionsrate OTR < 4 cm³/m²/d/atm aufweisen nach einer Wasserdampf-Sterilisierung ("Retort Treatment"), ist ohne Einsatz von anorganischen Metalloxiden, insbesondere solcher, die eine Gasphasenabscheidung erfordern, möglich.

Relevante bzw. kritische Merkmale der erfindungsgemäßen Formulierung sind das mindestens eine Hydrolysat mindestens eines Alkoxysilylalkyl-Einheiten tragenden Polyisocyanurats, insbesondere jenes, das unter der CAS-Registier-Nr. 261155-70-8 offenbart ist, und ein pH-Wert von 1,8 - 4,7, bevorzugt 3 - 4,5. Die daraus hergestellten erfindungsgemäßen Laminatstrukturen können gegenüber dem Stand der Technik auf vereinfachte Weise produziert werden und zeigen auch nach einer Wasserdampf-Sterilisierung ("Retort Treatment") akzeptable Werte der Sauerstofftransmissionsrate OTR, so dass eine Verwendung als Verpackungsmaterial beispielsweise für Lebensmittel und Pharmaprodukte möglich ist.

## Patentansprüche

1. Formulierung, aufweisend:
i) mindestens ein Hydrolysat mindestens einer Verbindung der Formel (I)
RSi(OX)₃ (I)
mit X gleich oder verschieden H, C₁ - C₄-Alkyl oder Acyl, R = OX, OH, C₁ - C₄-Alkyl oder Alkoxysilyl-substituierter Ethylenrest,
ii) mindestens ein Hydrolysat mindestens eines Alkoxysilylalkyl-Einheiten tragenden Polyisocyanurats,
iii) mindestens ein Hydroxylgruppen tragendes Polymer, und
iv) wasserhaltiges Lösungsmittelgemisch enthaltend mindestens einen Alkohol mit 1 bis 4 Kohlenstoffatomen,
**dadurch gekennzeichnet, dass** der pH-Wert in einem Bereich von 1,8 - 4,7, bevorzugt von 3 - 4,5, liegt.

2. Formulierung nach Anspruch 1, **dadurch gekennzeichnet, dass** die Formulierung mindestens eine nichtflüchtige Säure aufweist.

3. Formulierung nach Anspruch 2, **dadurch gekennzeichnet, dass** die nichtflüchtige Säure ausgewählt ist aus der Gruppe aufweisend Phosphorsäure, Maleinsäure, Malonsäure, Acetylsalicylsäure, Polyacrylsäure, Schwefelsäure, deren Säureanhydride oder Mischungen davon.

4. Formulierung nach Anspruch 2 oder 3, **dadurch gekennzeichnet, dass** der Gehalt an nichtflüchtiger Säure in einem Bereich von 0,03 Gew.-% bis 3 Gew.-%, bevorzugt von 0,1 Gew.-% bis 1 Gew.-%, besonders bevorzugt von 0,2 Gew.-% bis 0,7 Gew.-%, bezogen auf den Feststoffanteil der Formulierung, liegt.

5. Formulierung nach mindestens einem der Ansprüche 1 - 4, **dadurch gekennzeichnet, dass** das Alkoxysilylalkyl-Einheiten tragende Polyisocyanurat durch die Formel (II)
(R'-NCO)ₙ
wiedergegeben wird, mit n ≥ 3, bevorzugt n = 3, wobei R' einen mindestens 3 C-Atome aufweisenden, bevorzugt 3 C-Atome aufweisenden Alkylenrest darstellt, an den eine Trialkoxysilylgruppe, bevorzugt eine Trimethoxysilylgruppe, gebunden ist.

6. Formulierung nach Anspruch 5, **dadurch gekennzeichnet, dass** der Gehalt des Hydrolysates des Alkoxysilylalkyl-Einheiten tragenden Polyisocyanurats der Formel (II) von 1 Gew.-% bis 10 Gew.-%, bezogen auf den Feststoffanteil der Formulierung, beträgt.

7. Formulierung nach mindestens einem der Ansprüche 1 - 6, **dadurch gekennzeichnet, dass** das Hydroxylgruppen tragende Polymer ausgewählt ist aus der Gruppe beinhaltend Polyvinylalkohole, Ethylen-Vinylalkohol Copolymere, wobei der Verseifungsgrad über 85 %, bevorzugt über 95 % und wobei der Anteil der Ethyleneinheiten im Ethylen-Vinylalkohol Copolymer weniger als 28 Gew.-%, bezogen auf die Masse des Ethylen-Vinylalkohol Copolymeren, beträgt.

8. Formulierung nach mindestens einem der Ansprüche 1 - 7, **dadurch gekennzeichnet, dass** der Gehalt an SiO₂, stammend aus einer Verbindung der Formel (I) mit X = C₁ - C₄-Alkyl und R = OX in einem Bereich von 60 Gew.-% bis 90 Gew.-%, bevorzugt von 70 Gew.-% bis 85 Gew.-%, besonders bevorzugt von 75 Gew.-% bis 80 Gew.-%, bezogen auf den Feststoffanteil der Formulierung, beträgt.

9. Formulierung nach mindestens einem der Ansprüche 1 - 8, **dadurch gekennzeichnet, dass** der Gehalt eines Hydrolysates aus der Verbindung der Formel (I) mit X = C₁ - C₄-Alkyl und R = OH, C₁ - C₄-Alkyl oder Alkoxysilyl-substituierter Ethylenrest bis zu 20 Gew.-%, bevorzugt von 0,05 Gew.-% bis 15 Gew.-%, besonders bevorzugt von 1 Gew.-% bis 10 Gew.-% .-%, bezogen auf den Feststoffanteil der Formulierung, beträgt.

10. Formulierung nach mindestens einem der Ansprüche 1 - 9, **dadurch gekennzeichnet, dass** der Gehalt des Hydroxylgruppen tragenden Polymers von 13 Gew.-% bis 33 Gew.-%, bevorzugt von 15 Gew.-% bis 25 Gew.-%, besonders bevorzugt von 17 Gew.-% bis 22 Gew.-%, bezogen auf den Feststoffanteil der Formulierung, beträgt.

11. Verfahren zur Herstellung einer Formulierung nach mindestens einem der Ansprüche 1 - 10, **gekennzeichnet durch** die Schritte:
a) Bereitstellen mindestens:
a1) einer Alkoxysilyl-Einheiten beinhaltenden Verbindung der Formel (I), a2) eines Alkoxysilylalkyl-Einheiten tragenden Polyisocyanurats der Formel (II), a3) mindestens eines Hydroxylgruppen tragenden Polymeren,
a4) eines wasserhaltigen Lösungsmittelgemisches enthaltend mindestens einen Alkohol mit 1 bis 4 Kohlenstoffatomen,
a5) mindestens einer nichtflüchtigen Säure, deren Säureanhydrid oder Mischungen davon;
b) In-Kontakt-bringen der unter a1) - a5) genannten Edukte unter Bildung der Formulierung, wobei die Kontaktzeit von 1 min bis 5 h beträgt, die Temperatur mindestens 16°C beträgt und der pH-Wert in einem Bereich von 1,8 - 4,7, bevorzugt von 3 - 4,5 liegt.

12. Laminatstruktur mit mindestens 2 Schichten, aufweisend:
i) die Formulierung nach mindestens einem der Ansprüche 1 - 10 und
ii) ein Substrat mit einer Glasübergangstemperatur Tg > 60°C, bevorzugt Tg > 90°C, welches frei von anorganischen Oxidschichten aus Gasphasenabscheidungsprozessen ist.

13. Laminatstruktur nach Anspruch 12, **dadurch gekennzeichnet, dass** das Substrat transparent ist.

14. Laminatstruktur nach einem der Ansprüche 12 oder 13, **dadurch gekennzeichnet, dass** das Substrat von beiden Seiten mit der Formulierung nach mindestens einem der Ansprüche 1 - 10 beschichtet ist.

15. Laminatstruktur nach einem der Ansprüche 12 bis 14, **dadurch gekennzeichnet, dass** die Laminatstruktur eine Sauerstofftransmissionsrate nach Retort Treatment bis maximal 4 cm³/m²/d/atm aufweist.

16. Verfahren zur Herstellung einer Laminatstruktur nach mindestens einem der Ansprüche 12 - 15, **dadurch gekennzeichnet, dass** es die Schritte:
a) Bereitstellen einer Formulierung nach mindestens einem der Ansprüche 1 - 11;
b) Breitstellen eines Substrats,
c) optional Aktivierung des Substrats,
d) Beschichten des Substrats mit der unter a) genannten Formulierung, vorzugsweise auf beiden Seiten des Substrats,
e) erste Nachbehandlung unter Energieeintrag und
f) zweite Nachbehandlung unter den Bedingungen einer Wasserdampfsterilisierung,
aufweist.

17. Verfahren nach Anspruch 16, **dadurch gekennzeichnet, dass** es keinen Verfahrensschritt aufweist, in dem eine Gasphasenabscheidung erfolgt.
